# EUROPÄISCHE PATENTSCHRIFT

(11) **EP 0 553 471 B1**
(45) Veröffentlichungstag und Bekanntmachung des Hinweises auf die Patenterteilung: **23.08.1995**
(21) Anmeldenummer: 92121528.1
(22) Anmeldetag: 18.12.1992
(51) Int. Cl.: F16H 7/02

(54) **Riemenantrieb von elektrischen Maschinen**
Belt drive for electric machines
Transmission à courroie pour machines électriques

(30) Priorität: 25.01.1992 DE 4202001
(43) Veröffentlichungstag der Anmeldung: 04.08.1993
(73) Patentinhaber: ROBERT BOSCH GMBH, 70442 Stuttgart (DE)
(72) Erfinder: Koeppel, Johann, Techn., W-7120 Bietigheim-Bissingen (DE); Kunz, Johann, Techn., W-7126 Sersheim (DE); Lutz, Hans-Joachim, Dipl.-Ing., W-6840 Lampertheim (DE); Leins, Martin, W-7141 Schwieberdingen (DE); Lehnertz, Hermann, Dipl.-Ing., W-7012 Fellbach 5 (DE); Bilsing, Thomas, W-7120 Bietigheim (DE)

(56) Entgegenhaltungen:
- EP-A- 0 167 180
- DE-A- 4 035 583
- US-A- 1 900 208
- US-A- 3 952 546

## Beschreibung

### Stand der Technik

Die Erfindung geht aus von einem Riemenantrieb einer elektrischen Maschine, vorzugsweise eines Drehstromgenrators für Kraftfahrzeuge nach der Gattung des Patentanspruchs 1.

Aus der DE 30 30 701 A1 ist bereits ein derartiger Riemenantrieb für den Drehstromgenerator eines Kraftfahrzeugs bekannt, bei dem die Riemenscheibe zusammen mit dem antriebsseitigen Kupplungsteil einer Reibkupplung auf der Antriebswelle des Generators gelagert ist. Das abtriebsseitige Kupplungsteil ist auf der Antriebswelle festgespannt. Bei derartigen Lösungen müssen der Generator mit der Riemenscheibe und der Keilriemen bei der Montage genau aufeinander ausgerichtet sein. Eigenbewegungen des Generators während des Betriebes führen dort zu erhöhtem Verschleiß am Keilriemen bzw. an der Riemenscheibe bis hin zur Zerstörung.

Da jedoch in zunehmendem Maße zur Geräuschdämmung im Fahrzeug der Generator durch elastische Lagerung am Gehäuseblock der Brennkraftmaschine befestigt wird, um beispielsweise die magnetischen Geräusche des Drehstromgenerators im unteren Drehzahlbereich vom Motorblock zu entkoppeln, muß verhindert werden, daß der Generator durch den Zug der Riemenscheibe aufgrund der elastischen Befestigung des Generators sich zur Antriebsseite hin neigt.

Mit der vorliegenden Lösung wird angestrebt, auf möglichst einfache Weise die Riemenscheibe derart abzustützen, daß der Riemenzug nicht mehr am Ende der Antriebswelle des Drehstromgenerators wirksam werden kann.

### Vorteile der Erfindung

Die erfindungsgemäße Ausbildung des Riemenantriebes mit den kennzeichnenden Merkmalen des Patentanspruchs 1 hat den Vorteil, daß der von der Brennkraftmaschine angetriebene Keilriemen über die elastische Kupplung nur noch das Drehmoment auf die Antriebswelle des Drehstromgenerators überträgt und daß die an der Riemenscheibe wirksamen Riemenzugkräfte über das Lager der Riemenscheibe von dem am Maschinenaggregat festgeschraubten Befestigungsteil aufgenommen werden. Durch die elastische Kupplung zwischen Riemenscheibe und Antriebswelle der Lichtmaschine werden außerdem in vorteilhafter Weise axiale Toleranzen an der elastischen Befestigung des Drehstromgenerators sowie leichte Bewegungen des elastisch aufgehängten Generators während des Betriebes aufgenommen. Eine besonders einfache und damit vorteilhafte Abstützung der Riemenscheibe ergibt sich dadurch, daß die Riemenscheibe von einem Innenlager aufgenommen ist, das sich auf einem am Befestigungsteil angebrachten Lagerbolzen abstützt.

Durch die in den Unteransprüchen aufgeführten Maßnahmen ergeben sich vorteilhafte Weiterbildungen und Verbesserungen der im Patentanspruch 1 angegebenen Merkmale. So ist es bei Verwendung einer sogenannten Poly-V-Riemenscheibe besonders vorteilhaft, wenn das Ende des Lagerbolzens für die Riemenscheibe dicht vor dem Ende der Maschinenwelle steht, an welches ein Mitnehmer der elastischen Kupplung zu befestigen ist, der über mindestens ein elastisches Kupplungsteil mit der Riemenscheibe verbunden ist. Bei dieser Lösung kann der Wellenstumpf des Drehstromgenerators sehr kurz gehalten werden, da er lediglich das abtriebsseitige Kupplungsteil mit dem Mitnehmer trägt, was eine im Kraftfahrzeugbau geforderte kompakte Bauweise ermöglicht. Dabei ist besonders zweckmäßig, wenn der am Ende der Maschinenwelle zu befestigende Mitnehmer eine Scheibe ist, die mehrere über den Umfang verteilte Aussparungen aufweist, in welche unter Zwischenfügung von Gummiteilen Zapfen einer am Ende der Riemenscheibe befestigten zweiten Scheibe lösbar und axial verschiebbar eingreifen. Eine solche Ausführung gestattet erhebliche axiale Verschiebungen der Maschinenwelle gegenüber der Riemenscheibe und erlaubt entsprechend große axiale Montagetoleranzen. Die Ausrichtung der Riemenscheibe zum Keilriemen erfolgt bei der erfindungsgemäßen Lösung ausschließlich über das am Maschinenaggregat justierbar anzubringende Befestigungsteil für die Riemenscheibe, das in vorteilhafterweise als formstabile Lasche ausgebildet ist, an deren einem Ende der Lagerbolzen der Riemenscheibe befestigt ist und deren anderes Ende am Maschinenaggregat lösbar und justierbar angebracht ist.

### Zeichnung

Ausführungsbeispiele der Erfindung sind in der Zeichnung dargestellt und in der nachfolgenden Beschreibung näher erläutert. Es zeigen Figur 1 die Anordnung eines Drehstromgenerators am Gehäuseblock einer Brennkraftmaschine mit abgestützter Riemenscheibe, Figur 2 ein erstes Ausführungsbeispiel der abgestützten Riemenscheibe mit elastischer Kupplung an der Antriebswelle des Drehstromgenerators und Figur 2a einen Ausbruch der elastischen Kupplung. Figur 3 und 4 zeigen Ausführungsbeispiele einer abgestützten Poly-V-Riemenscheibe mit elastischer am Wellenende einer Drehstrommaschine lösbar befestigter Kupplung.

### Beschreibung der Ausführungsbeispiele

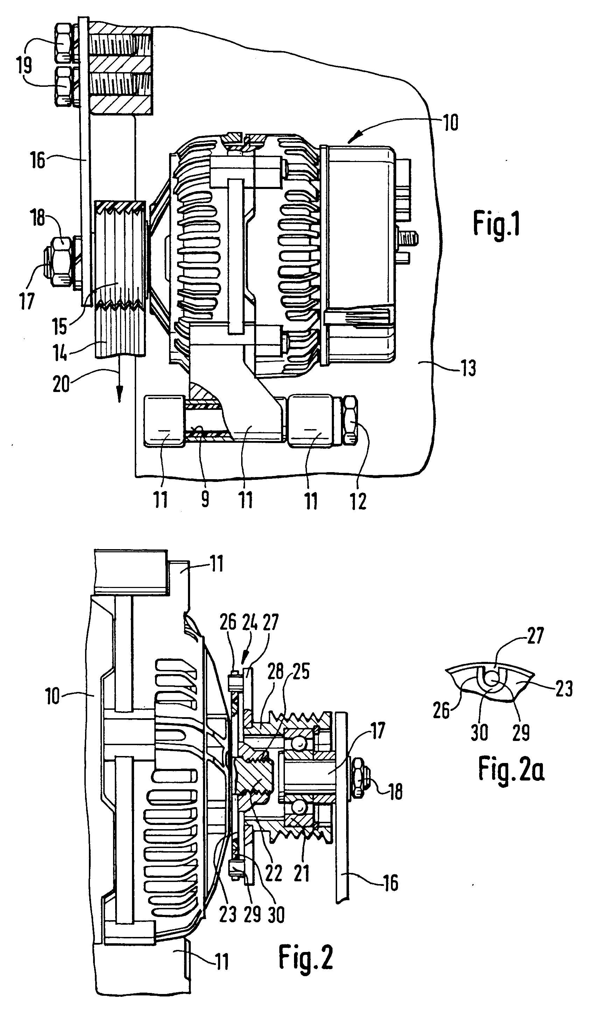

In Figur 1 ist ein mit 10 bezeichneter Drehstromgenerator über mehrere Lageraugen 11 und Lagerbolzen 12 am Gehäuse 13 eines Brennkraftmaschinenaggregates (Motorblock) befestigt. Durch Dämpfungsbuchsen 9 in den Lageraugen 11 wird eine Geräuschentkopplung des Generators 10 vom Motorgehäuse 13 erreicht. Der Generator 10 wird von der Brennkraftmaschine über einen sogenannten Poly-V-Riemen 14 mittels einer am antriebsseitigen Ende des Generators 10 angeordneten Riemenscheibe 15 angetrieben. Ein als Befestigungslasche 16 ausgebildetes Befestigungsteil stützt die Riemenscheibe über ein nicht erkennbares Lager und einen Lagerbolzen 17 ab, der am einen Ende der Befestigungslasche 16 mit einer Mutter 18 festgeschraubt ist. Das andere Ende der Befestigungslasche 16 ist mittels Schrauben 19 justierbar am Motorgehäuse 13 befestigt, über diese Befestigungslasche 16 werden Riemenscheibe 15 und Riemen 14 aufeinander ausgerichtet, wobei die im wesentlichen in Richtung des Pfeiles 20 nach unten gerichteten Zugkräfte des Riemens 14 von der nach oben verlaufenden Befestigungslasche 16 aufgenommen werden, so daß an der Antriebswelle des Generators 10 nur noch das über den von der Brennkraftmaschine angetriebenen Riemen 14 übertragene Drehmoment wirksam wird. Die Riemenscheibe 15 ist dabei über eine nicht erkennbare elastische Kupplung mit der Antriebswelle des Generators 10 verbunden. Verschiedene Ausführungsformen der am Ende der Antriebswelle des Generators 10 lösbaren elastischen Kupplung sowie die Lagerung der Keilriemenscheibe 15 sind in den Ausführungsbeispielen der Figuren 2 bis 4 dargestellt.

In Figur 2 ist die Riemenscheibe 15 auf ihrer Innenseite auf einen Außenring eines Kugellagers 21 aufgesetzt und gegen Axialverschiebung gesichert. Das Kugellager 21 ist mit seinem Innenring auf den an der Befestigungslasche 16 festgeschraubten Lagerbolzen 17 befestigt und ebenfalls gegen Axialverschiebung gesichert. Dicht vor dem Ende des Lagerbolzens 17 befindet sich axial fluchtend das Ende der Antriebswelle 22 des im Ausschnitt dargestellten Drehstromgenerators 10. Auf dem Ende der Antriebswelle 22 ist mittels einer Mutter 25 ein als Scheibe 23 ausgebildeter Mitnehmer einer elastischen Kupplung 24 festgeschraubt, welche mehrere über den Umfang verteilte Aussparungen 26 aufweist. Vor dieser den abtriebsseitigen Teil der Kupplung 24 bildenden Mitnehmerscheibe 23 befindet sich mit axialem Luftspalt eine weitere Scheibe 27, die als antriebsseitigen Teil der Kupplung 24 auf einem vorderen axialen Ansatz 28 der Riemenscheibe 15 befestigt ist. Mehrere am Umfang dieser Scheibe 27 befestigte, axial vorstehende Zapfen 29 greifen dabei in die entsprechend angeordneten Aussparungen 26 der Mitnehmerscheibe 23 ein, wobei zwischen den Zapfen 29 und den Aussparungen 26 U-förmige Gummiteile 30 eingesetzt sind.

Figur 2a zeigt einen Ausbruch der Kupplung 24 im Bereich einer Aussparung 26 der Mitnehmerscheibe 23 mit einem Gummiteil 30 und den darin eingreifenden Zapfen 29 der Scheibe 27. Bei dieser Ausführungsform der elastischen Kupplung 24 sind Montagetoleranzen sowie leichte Bewegungen des Generators 10 einschließlich axialer Bewegungen oder Nickbewegungen des Generators während des Betriebes ohne Übertragung auf die Riemenscheibe 15 aufzunehmen. Außerdem läßt sich bei Bedarf durch diese Kupplung 24 die Riemenscheibe 15 durch Abschrauben der Befestigungslasche 16 am Motorgehäuse 13 entfernen und der Keilriemen erneuern.

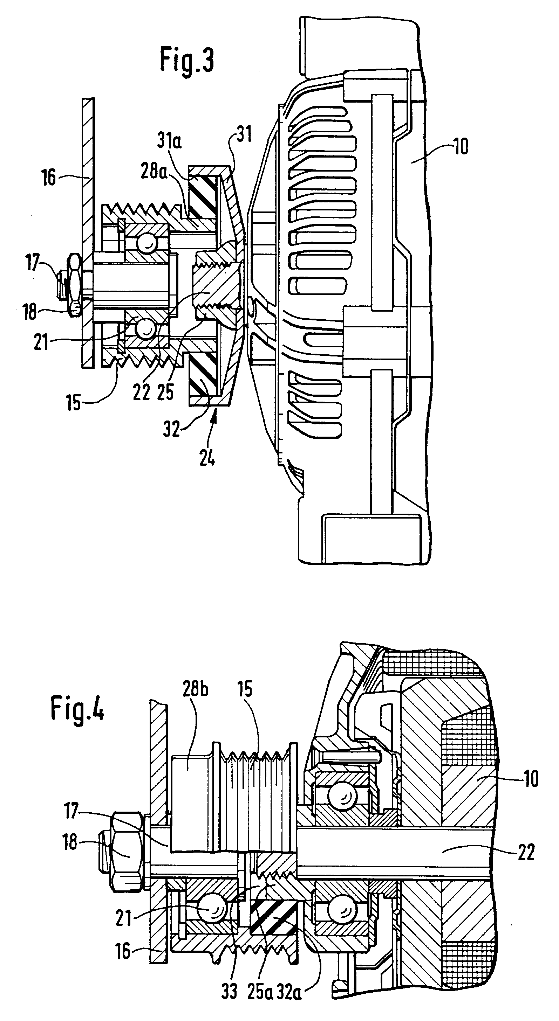

Bei dem Ausführungsbeispiel nach Figur 3 besteht das antriebsseitige Kupplungsteil aus den vorderen axialen ringförmigen Ansatz 28a der Riemenscheibe 15, der in einen topfförmigen Mitnehmer 31 ragt. Der topfförmige Mitnehmer 31 ist mit der Mutter 25 am Ende der Antriebswelle 22 des Generators 10 festgeschraubt. Zwischen der Innenwandung 31a des topfförmigen Mitnehmers 31 und dem dort hineinragenden Ansatz 28a der Riemenscheibe 15 ist ein Gummiring 32 als elastisches Kupplungsteil einvulkanisiert. Auch bei diesem Ausführungsbeispiel wird über die elastische Kupplung 24 nur das Drehmoment vom Keilriemen auf die Antriebswelle 22 des Generators 10 übertragen und beim Erneuern des Keilriemens wird lediglich die Befestigungslasche 16 vom Motorgehäuse 13 abgeschraubt.

Bei dem Ausführungsbeispiel nach Figur 4 ragt der vordere Teil der Riemenscheibe 15 über eine am Ende der Antriebswelle 22 des Generators 10 aufgeschraubte Mutter 25a. Diese Mutter 25a hat auf der vorderen Stirnseite vier kreuzförmig angeordnete Schlitze 33 für den Eingriff eines Werkzeugs und sie wird mit einem Gewinde am Wellenstumpf der Antriebswelle 22 in der Art festgeschraubt, daß die Mutter 25a sich durch das vom Keilriemen übertragene Drehmoment festspannt (Linksgewinde) bei linkslaufendem Generator bzw. Rechtsgewinde bei rechtslaufendem Generator). Zwischen dem Außenumfang der Mutter 25a und der Innenseite des die Mutter 25a überragenden Abschnitts der Riemenscheibe 15 ist als elastisches Kupplungsteil ein Gummiring 32a einvulkanisiert, der das Drehmoment von der Riemenscheibe 15 auf die Antriebswelle 22 überträgt. In Abänderung der Riemenscheibe 15 nach Figur 4 ist es auch möglich, den Ansatz 28b nicht auf der dem Kugellager 21 zugeordneten Seite sondern auf der zum Generator 10 hin gerichteten Seite anzuordnen, so daß der den Keilriemen 14 tragende Bereich unmittelbar vom Kugellager 21 abgestützt wird. In diesem Fall wird der Gummiring 32a zwischen der am Wellenstumpf der Antriebswelle 22 befestigten Mutter 25a und dem Ansatz 28b einvulkanisiert.

Bei dem erfindungsgemäßen Riemenantrieb ist die Anbringung der elektrischen Maschine am Motorblock bzw. am Maschinenaggregat nicht zwingend erforderlich. Auch wenn sie an anderen Teilen, Aufbauten oder dgl. befestigt wird, ist mit der erfindungsgemäßen Lösung eine Entlastung der Maschinenwelle von den Riemenzugkräften des Riemenantriebs möglich, sofern das Befestigungsteil mit der daran gelagerten Riemenscheibe an dem Aggregat befestigt wird, welches über den Antriebsriemen mit der elektrischen Maschine verbunden ist. Die elektrische Maschine kann daher auch ein Motor sein, der ein Aggregat antreibt.

## Patentansprüche

1. Riemenantrieb einer elektrischen Maschine, vorzugsweise eines Drehstromgenerators für Kraftfahrzeuge mit einer am Antriebsende der Maschinenwelle angeordneten Riemenscheibe, die über eine Kupplung mit der Maschinenwelle zu verbinden ist, dadurch gekennzeichnet, daß die Kupplung (24) mindestens ein elastisches Kupplungsteil (30, 32, 32a) zwischen Antriebs- und Abtriebsseite der Kupplung (24) aufweist und daß zur Aufnahme der Riemenzugkräfte (20) die Riemenscheibe (15) über ein Innenlager (21) auf einem Lagerbolzen (17) eines Befestigungsteils (16) befestigt ist, welches einerseits zumindest etwa entgegen der Riemenzugrichtung ausgerichtetet an einem solchen Maschinenaggregat (13), vorzugsweise dem Antriebsmotor eines Kraftfahrzeugs zu befestigen ist, mit dem die elektrische Maschine (10) einerseits über den Antriebsriemen (14) verbunden und an dem sie andererseits über elastische Mittel (9) schallentkoppelt befestigt ist.

2. Riemenantrieb nach Anspruch 1, dadurch gekennzeichnet, daß die für einen Poly-V-Riemen (14) ausgebildete Riemenscheibe (15) über ein Kuggellager (21) auf dem Lagerbolzen (17) gelagert ist, dessen Ende vor dem Ende der Maschinenwelle (22) steht, an welches ein Mitnehmer (23, 25a, 31) der elastischen Kupplung (24) zu befestigen ist, welcher über mindestens ein elastisches Kupplungsteil (30, 32, 32a) mit der Riemenscheibe (15) verbunden ist.

3. Riemenscheibe nach Anspruch 2, dadurch gekennzeichnet, daß der am Ende der Maschinenwelle (22) zu befestigende Mitnehmer (23) eine Mitnehmerscheibe ist, die mehrere über den Umfang verteilte Aussparungen (26) aufweist, in welche unter Zwischenfügung von Gummiteilen (30) Zapfen (29) einer am Ende der Riemenscheibe (15) befestigten weiteren Scheibe (27) lösbar und axial verschiebbar eingreifen.

4. Riemenantrieb nach Anspruch 3, dadurch gekennzeichnet, daß die weitere Scheibe (27) der elastischen Kupplung (24) auf einem vorderen axialen Ansatz (28) der Riemenscheibe (15) befestigt ist.

5. Riemenscheibe nach Anspruch 2, dadurch gekennzeichnet, daß ein vorderer axialer Ansatz (28a) der Riemenscheibe (15) in einem topfförmigen, am Ende der Maschinenwelle (22) zu befestigenden Mitnehmer (31) ragt und daß zwischen der Innenwandung (31a) des Mitnehmers (31) und dem Ansatz (28) der Riemenscheibe (15) ein Gummiring (32) einvulkanisiert ist.

6. Riemenantrieb nach Anspruch 2, dadurch gekennzeichnet, daß der vordere Teil der Riemenscheibe (15) über eine am Ende der Maschinenwelle (22) zu befestigende Mutter (25a) ragt und daß zwischen dem Außenumfang der Mutter (25a) und der Innenseite des die Mutter überragenden Abschnitts der Riemenscheibe (15) ein Gummiring (32a) einvulkanisiert ist.

7. Riemenscheibe nach einem der Ansprüche 1 bis 6, dadurch gekennzeichnet, daß der Lagerbolzen (17) der Riemenscheibe (15) an dem einen Ende einer als Befestigungslasche (16) ausgebildeten Befestigungsteiles festgeschraubt ist, deren anderes Ende am Maschinenaggregat (13) lösbar und justierbar zu befestigen ist.

8. Riemenscheibe nach einem der Ansprüche 1 bis 7, dadurch gekennzeichnet, daß die elektrische Maschine (10) schallisoliert über elastische Buchsen (9) am Maschinenaggregat (13) zu befestigen ist.

## Claims

1. Belt drive of an electric machine, preferably of a three-phase alternator for motor vehicles, with a belt pulley which is arranged at the driving end of the machine shaft and which is to be connected to the machine shaft via a coupling, characterized in that the coupling (24) has at least one elastic coupling part (30, 32, 32a) between the driving and the driven side of the coupling (24), and in that, in order to absorb the belt pulling forces (20), the belt pulley (15) is fastened via an inner bearing (21) on a bearing bolt (17) of a fastening part (16) which, on the one hand, is to be fastened, in a manner oriented at least approximately opposite to the belt pulling direction, to such a machine unit (13), preferably the engine of a motor vehicle, to which, on the one hand, the electric machine (10) is connected via the drive belt (14) and to which, on the other hand, it is fastened in an acoustically isolated manner via elastic means (9).

2. Belt drive according to Claim 1, characterized in that the belt pulley (15) designed for a poly-V-belt (14) is mounted via a ballbearing (21) on the bearing bolt (17), the end of which is located in front of that end of the machine shaft (22) to which a dog (23, 25a, 31) of the elastic coupling (24) is to be fastened, the said dog being connected to the belt pulley (15) via at least one elastic coupling part (30, 32, 32a).

3. Belt pulley according to Claim 2, characterized in that the dog (23) to be fastened to the end of the machine shaft (22) is a dog plate having a plurality of clearances (26) which are distributed over the circumference and into which studs (29) of a further plate (27) fastened to the end of the belt pulley (15) engage releasibly and axially displaceably, with rubber parts (30) being interposed.

4. Belt drive according to Claim 3, characterized in that the further plate (27) of the elastic coupling (24) is fastened to a front axial extension (28) of the belt pulley (15).

5. Belt pulley according to Claim 2, characterized in that a front axial extension (28a) of the belt pulley (15) projects in a pot-shaped dog (31) to be fastened to the end of the machine shaft (22), and in that a rubber ring (32) is vulcanized in between the inner wall (31a) of the dog (31) and the extension (28) of the belt pulley (15).

6. Belt drive according to Claim 2, characterized in that the front part of the belt pulley (15) projects beyond a nut (25a) to be fastened to the end of the machine shaft (22), and in that a rubber ring (32a) is vulcanized in between the outer circumference of the nut (25a) and the inside of that portion of the belt pulley (15) projecting beyond the nut.

7. Belt pulley according to one of Claims 1 to 6, characterized in that the bearing bolt (17) of the belt pulley (15) is firmly screwed to one end of a fastening part which is designed as a fastening strap (16) and the other end of which is to be fastened releasibly and adjustably to the machine unit (13).

8. Belt pulley according to one of Claims 1 to 7, characterized in that the electric machine (10) is to be fastened to the machine unit (13) in an acoustically isolated manner via elastic bushes (9).

## Revendications

1. Transmission à courroie pour une machine électrique, de préférence un alternateur triphasé pour véhicule à moteur, avec une poulie de courroie disposée à l'extrémité de l'arbre d'entraînement de la machine, courroie que l'on doit relier par un accouplement à l'arbre de la machine, transmission à courroie caractérisée en ce que l'accouplement (24) présente au moins une pièce d'accouplement élastique (30, 32, 32a) entre le côté entraîneur et le côté entraîné de l'accouplement (24), et en ce que, pour absorber les forces de traction de la courroie (20), on fixe la poulie (15) de la courroie, au moyen d'un roulement interne (21), sur un axe de palier (17) d'une pièce de fixation (16) que l'on doit fixer d'une part en l'orientant au moins à peu près en sens contraire du sens dans lequel la courroie tire sur un tel ensemble (13), de préférence le moteur d'entraînement d'un véhicule automobile auquel la machine électrique (10) est reliée d'une part au moyen de la courroie d'entraînement (14) et sur lequel, d'autre part, elle est fixée à l'aide de moyens élastiques (9) qui désaccouplent le son.

2. Transmission à courroie selon la revendication 1, caractérisée en ce que la poulie (15) de la courroie, constituée pour une courroie polyvalente (14) en V est montée au moyen d'un roulement à billes (21) sur l'axe de palier (17) dont l'extrémité se trouve avant l'extrémité de l'arbre de la génératrice (22), sur laquelle on doit fixer un entraîneur (23, 25a, 31) de l'accouplement élastique (24), entraîneur qui est relié par au moins une pièce élastique d'accouplement (30, 32, 32a) à la partie (15) de la courroie.

3. Transmission à courroie selon la revendication 2, caractérisée en ce que l'entraîneur (23) à fixer à l'extrémité de l'arbre de la machine (22), est un disque d'entraînement qui présente plusieurs évidements (26) répartis sur le pourtour, évidements dans lesquels viennent en prise, avec interposition de pièces en caoutchouc (30), des tenons (29) d'un autre disque.

4. Transmission à courroie selon la revendication 3, caractérisée en ce que l'autre disque (27) de l'accouplement élastique (24) est fixé sur un appendice antérieur axial (28) de la poulie (15) de la courroie.

5. Poulie de courroie selon la revendication 2, caractérisée en ce qu'un appendice axial antérieur (28a) de la poulie (15) de la courroie pénètre dans un entraîneur (31) en forme de pot, à fixer à l'extrémité de l'arbre de la machine (22), et en ce qu'entre la paroi intérieure (31a) de l'entraîneur (31) et l'appendice (28) de la poulie (15) de la courroie, on vulcanise une bague en caoutchouc (32).

6. Transmission à courroie selon la revendication 2, caractérisée en ce que la partie antérieure de la poulie (15) de la courroie pénètre sur un écrou (25a) à fixer à l'extrémité de l'arbre (22) de la machine, et en ce qu'entre le pourtour extérieur de l'écrou (25a) et la face intérieure de la section de la poulie (15) de la courroie qui vient sur l'écrou, on vulcanise une bague en caoutchouc (32a).

7. Poulie de courroie selon l'une des revendications 1 à 6, caractérisée en ce que l'axe de palier (17), de la poulie (15) de la courroie, est solidement boulonné à l'une des extrémités d'une pièce de fixation constituée sous la forme d'une patte de fixation (16) dont l'autre extrémité doit être fixée de façon amovible et ajustable sur l'ensemble moteur (13).

8. Poulie de courroie selon l'une des revendications 1 à 7, caractérisée en ce que la machine électrique doit être fixée de façon à isoler le son, au moyen de douilles élastiques (9), sur l'ensemble moteur (13).
